Europäisches Patentamt

European Patent Office

Office européen des brevets

(19)

(11) Publication number:

**0 340 825**

**A1**

(12)

# EUROPEAN PATENT APPLICATION

(21) Application number: **89200949.9**

(22) Date of filing: **14.04.89**

(51) Int. Cl.⁴: **F24D 3/14**

(30) Priority: **22.04.88 BE 8800459**

(43) Date of publication of application:
**08.11.89 Bulletin 89/45**

(84) Designated Contracting States:
**DE ES FR GB IT NL**

(71) Applicant: **Elektriciteit voor Goederenbehandeling Marine en Industrie, in het verkort EGEMIN, naamloze vennootschap**
**Bredabaan 1201**
**B-2120 Schoten(BE)**

(72) Inventor: **Michielsen, Luc**
**'s Herenlei 11**
**B-2550 Kontich(BE)**
Inventor: **Mulier, Guido**
**Karel van Lotharingenstraat 25**
**B-3000 Leuven(BE)**

(74) Representative: **Donné, Eddy**
**Bureau M.F.J. Bockstael nv Arenbergstraat 13**
**B-2000 Antwerpen(BE)**

(54) Improved wall cooling, respectively wall heating.

(57) Improved wall cooling, respectively heating, characterized in that it mainly consists in at least two parallel circuits (3-4-9) which each are connected with a cooling device, respectively heating device, in which such pairs of pipes are being fed in counter-flow.

Fig.1

EP 0 340 825 A1

## Improved wall cooling, respectively wall heating.

Present invention concerns an improved wall cooling, respectively wall heating, more particularly such a cooling, respectively heating, in which the goal is to achieve the best possible homogeneous cooling, respectively heating, in the concerned wall.

A particular application thereof can be seen in, for instance, fish markets where it is quite advantageous to cool the floor as homogeneously as possible in order to maintain it at a steady temperature slightly higher than 0° centigrade in order to, on the one hand, counteract the quick warming up of fish under the influence of heat radiation and convection originating from the floor and, on the other hand, to avoid the formation of ice on, or the freezing up of the floor as this could be potentially dangerous for the auction personnel and/or customers of or visitors to the fish market.

This improved wall cooling, respectively wall heating, consists for this purpose in at least two parallel circuits which each are connected with a cooling device, respectively heating device, in which such pairs of pipes are being fed in counterflow.

In order to better show the characteristics of present invention, some preferable embodiments are described hereafter as an example without any restrictive character with reference to the attached drawings, in which :

figure 1 shows a schematic plan view of a cooled, respectively heated wall, in which the improvements according to the invention are applied ;

figure 2 shows, at a larger scale, the part indicated by F2 in figure 1 ;

figure 3 shows, at a larger scale, a cross section according to line II-II in figure 2 ;

figures 4 and 5 show variants of figure 2 ;

figure 6 shows, at a larger scale, a schematic cross section through the complete wall according to the invention ;

figures 6 and 7 show variants of figure 6.

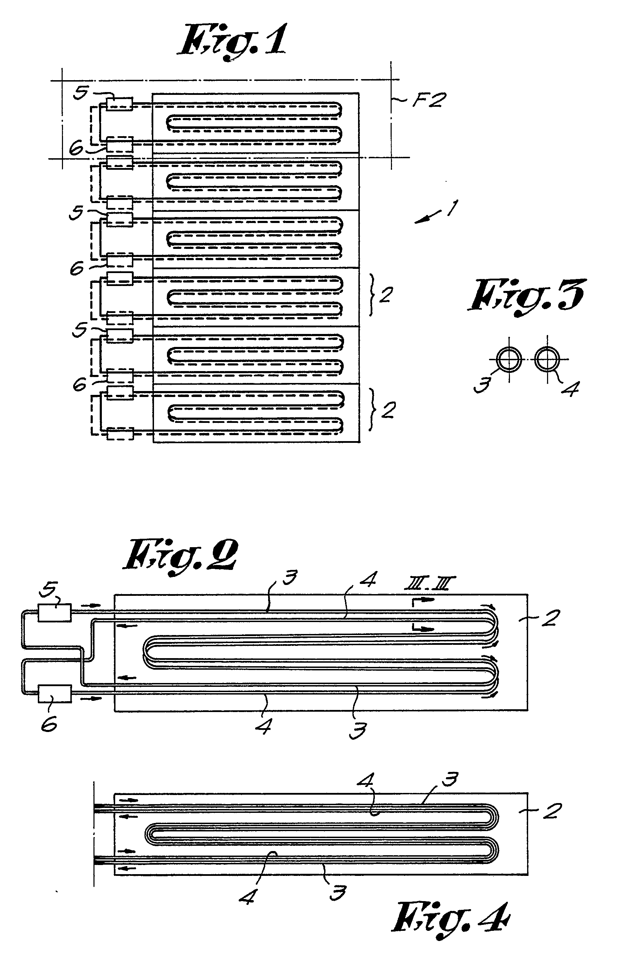

In figure 1, a wall, more particularly a floor 1, of a fish market is schematically represented which, in this case, is split up in various parts 2, which each are cooled separately according to the invention.

Aforementioned embodiment is indeed important to achieve a rationalized cooling as in this way the improvements according to the invention can be applied efficiently, on the one hand, and that small cooled surfaces can be used in which the cooling can be appropriately adjusted to the amount of material to be cooled in such way that cooling is maximized, on the other hand.

According to the invention, in the floor 1, more particularly a part 2 of such floor, a double circuit, respectively 3 and 4 is installed for instance in the shape of a so-called cooling coils which are each individually operated, in this case by a cooling unit, respectively 5 and 6, which for instance, primarily, consists in a not shown heat exchanger, a receptacle with cooling liquid, for instance glycol and a circulation pump.

It is obvious that series of circuits 3 and 4 can be connected with one same unit 5 and 6.

Circuits 3 and 4 are, in this case, placed in such way that an outgoing part of the cooling pipe is being located in the immediate proximity of a return part of the next cooling, in such way that due to the heat transfer between the floor and the circuits 3 and 4 and due to this the steady increase of temperature from the beginning of the circuit in the floor to the exit of the circuit out of the floor the temperature of one circuit with respect to the other circuit is such at each point that in this point the joint temperatures of one circuit and the other circuit forms a constant or approximately so.

Indeed, the heat emission or absorption in both circuits shall change gradually, but in opposite direction in such way that the local temperatures of the parallel circuits shall be just about the same at any location.

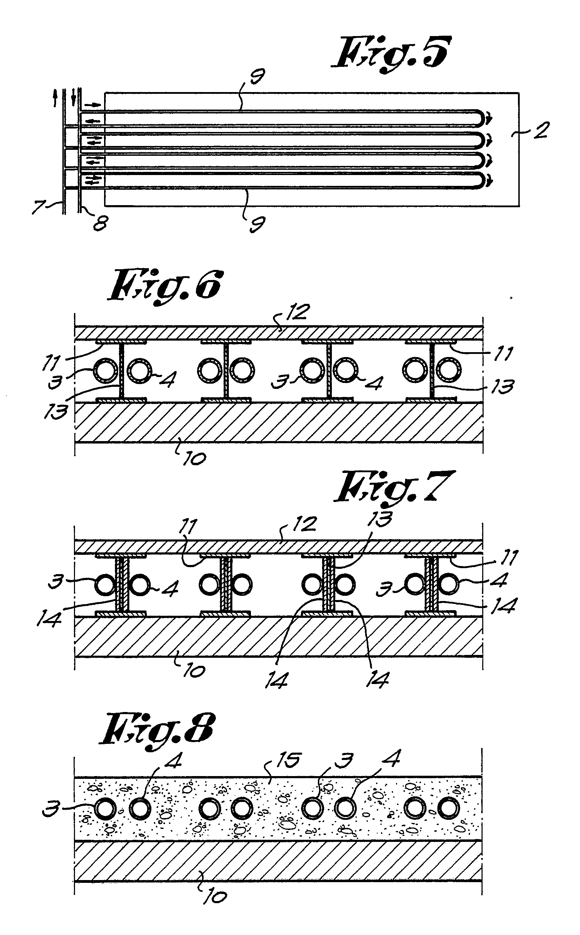

Figures 2 and 3 show that this goal can be achieved by the parallel positioning of a so-called warm part and a so-called cold part of two circuits.

Herewith one is also attempting, always with the aim in mind of achieving a best possible homogeneous cooling, to locate the so-called cold and warm parts of circuits 3 and 4 in the best possible alternation. In figures 2 and 4 this occurs by overlapping or interweaving the circuit's installation.

Figure 5 shows an embodiment in which the homogeneous cooling or heating is achieved by thinking in terms of two main pipes, respectively 7 and 8, which as a matter of fact form the outgoing and returning pipes to a cooling device or a heating device in which parallel coil shaped circuits 9 are connected to these pipes 7 and 8, in such way that a so-called cold part of a circuit 9 always is located next to a so-called warm part of another circuit 9.

In figures 6 and 8, three examples of embodiments of cooled, respectively .heated walls according to the invention are shown schematically in vertical cross section.

In figure 6, such a wall, more particularly a floor, is preferably formed by an insulating base layer 10 on which metal sections 11 are placed, which are in turn supporting a floor 12, for instance in metallic sheets, in such way that on subject floor forklifts, among others, can operate in an appropriate manner.

In this case, on the one side and on the other side, of the body 13 of a section 11 the outgoing, respectively returning, part of a circuit 3, 4, respectively 9, is being installed.

In figure 7 a similar embodiment is shown in which, in this case, the body 13 of a section 11 is equipped with a thermal insulation material 14 in order to, in this case, achieve that the direct heat transfer of one circuit to the other is reduced and as a consequence thereof that the efficient heat transfer between the floor 12 and the circuits 3, 4 or 9 is being increased.

Finally, in figure 8 an embodiment is shown in which on an appropriate layer of insulating material 10 a floor 15 in solid material such as concrete, heat conducting synthetic material or similar is provided for in which the circuits 3-4, or 9 are moulded.

It is evident that in this manner a wall cooling, respectively wall heating is being obtained allowing for a very homogeneous and controllable heat distribution.

Present invention is obviously not limited to the examples described as an example and shown in the enclosed drawings, but can be realized in all shapes and dimensions without leaving the scope of the invention.

## Claims

1.- Improved wall cooling, respectively heating, characterized in that it mainly consists in at least two parallel circuits (3-4-9) which each are connected with a cooling device, respectively heating device, in which such pairs of pipes are being fed in counterflow.

2.- Improved wall cooling, respectively wall heating according to claim 1, characterized in that each circuit (3-4) is in the shape of a so-called cooling coils.

3.- Improved wall cooling, respectively wall heating according to claim 1, characterized in that each circuit (9) is coil shaped.

4.- Improved wall cooling, respectively wall heating according to claim 2, characterized in that each circuit (3-4) is connected with an individual cooling device, respectively heating device.

5.- Improved wall cooling, respectively wall heating according to claim 2, characterized in that two or more circuits (3-4) are connected with an individual cooling device, respectively heating device.

6.- Improved wall cooling, respectively wall heating according to claim 3, characterized in that the coil shaped circuits (9), on the one hand, are connected with a common outgoing pipe (8) and, on the other hand, with a common return pipe (7).

7.- Improved wall cooling, respectively wall heating according to claim 1, 2, 4 or 5, characterized in that the circuits (3-4) are interwoven.

8.- Improved wall cooling, respectively wall heating according to claim 1, 2, 4 or 5, characterized in that the circuits (3-4) overlap each other.

9.- Improved wall cooling, respectively wall heating according to claim 1, 3, or 6, characterized in that the coil shaped circuits (9) are located next to one another with an outgoing pipe part of one circuit next to the returning pipe part of the last coil loop.

10.- Improved wall cooling, respectively wall heating according to one of the aforementioned claims, characterized in that one wall with circuits (3-4-9) mainly consists in sections (11) which, on the one side and on the other side are provided with a layer of insulating material (10), respectively the factual coating (12), and in which aforementioned circuits (3-4-9) are provided for next to the sections (11) and between the layers (10) and (12).

11.- Improved wall cooling, respectively wall heating according to claim 10, characterized in that the sections (11) are formed by I-shaped sections in which next to the respective sides of the body (13) of such an I-shaped section (11) an outgoing pipe, respectively return pipe, of the circuits (3-4-9) is provided.

12.- Improved wall cooling, respectively wall heating according to claim 10 or 11, characterized in that when the sections (11) are manufactured in a thermal conductive material the body (13) thereof is provided with a layer of insulating material (14).

13.- Improved wall cooling, respectively wall heating according to one of the claims 10 through 12, characterized in that in the case of a floor where on, for instance, forklifts must be able to operate, the sections (11), on the one hand, and the coating (12), on the other hand, are made out of metal.

14.- Improved wall cooling, respectively wall heating according to one of the claims 1 through 9, characterized in that it is being formed by a layer of insulating material (10) on which a layer of thermal conductive material (15) is provided in which the circuits (3-4-9) are moulded.

15.- Improved wall cooling, respectively wall heating, according to claim 14, characterized in that the layer (15) is formed by concrete.

16.- Improved wall cooling, respectively wall heating, according to claim 14, characterized in that the layer (15) is formed by a synthetic material.

Fig.1

Fig.3

Fig.2

Fig.4

Fig.5

Fig.6

Fig.7

Fig.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 047 633 (HINDS) * Abstract * | 1,2,7 | F 24 D 3/14 |
| X | CH-A- 552 179 (SCHÄRER) * Whole document * | 1,3,6,9 | |
| X | NL-A-7 201 051 (CTC GmbH) * Whole document * | 1,14,15 | |

TECHNICAL FIELDS SEARCHED (Int. Cl.4)

F 24 D

The present search report has been drawn up for all claims

| Place of search | Date of completion of the search | Examiner |
|---|---|---|
| THE HAGUE | 28-06-1989 | VAN GESTEL H.M. |